# EUROPÄISCHE PATENTANMELDUNG

(11) **EP 1 024 258 A2**
(43) Veröffentlichungstag der Anmeldung: **02.08.2000**
(21) Anmeldenummer: 99123559.9
(22) Anmeldetag: 26.11.1999
(51) Int. Cl.: F02B 27/02

(54) **Luftsauganlagen**

(30) Priorität: 27.01.1999 DE 19903123
(71) Anmelder: Dr.Ing. h.c.F. Porsche Aktiengesellschaft, 70435 Stuttgart (DE)
(72) Erfinder: Rutschmann, Erwin, 75233 Tiefenbronn (DE)

(57) **Zusammenfassung**

Diese Luftsauganlage ist an einer mehrzylindrigen Brennkraftmaschine mit gegenüberliegenden Zylinderreihen vorgesehen, und sie ist mit einer Resonanzkammervorrichtung ausgestattet. Die Resonanzkammervorrichtung weist äußere und innere Saugrohrabschnitte auf, wovon die inneren Saugrohrabschnitte bewegliche Schieber umfassen, mit denen in Abhängigkeit von Parametern der Brennkraftmaschine lange und kurze Saugrohre realisierbar sind.

Die Resonanzkammervorrichtung besitzt einen einzigen Resonanzbehälter, in dem durch Anordnung der inneren Saugrohrabschnitte und Verstellung der Schieber ein effizienter die Füllung der Zylinder der Brennkraftmaschine optimierender Langrohr- und Kurzrohrbetrieb realisierbar ist.

## Beschreibung

Die Erfindung bezieht sich auf eine Luftsauganlage einer mehrzylindrigen Brennkraftmaschine nach dem Oberbegriff des Patentanspruchs 1.

In der US-PS 3,783,845 wird eine Luftsauganlage für eine Brennkraftmaschine behandelt, die einen Behälter mit darin schräg zu einer Horizontalen angeordneten Saugrohrabschnitten aufweist, deren Endstücke sich gegenseitig überragen.

Die DE 44 02 717 A1 zeigt ebenfalls eine Brennkraftmaschinen-Luftsauganlage, die einen von Resonanzbehältern getrennten Schwingrohrbehälter aufweist. In den Resonanzbehältern sind Saugrohrverlängerungsabschnitte vorgesehen, deren Enden Schiebemuffen aufweisen.

Aufgabe der Erfindung ist es, eine Sauganlage für eine Brennkraftmaschine zu schaffen, die bei guter Funktion - Liefergradverbesserung - einen einfachen konstruktiven Aufbau aufweist.

Erfindungsgemäß wird diese Aufgabe durch die Merkmale des Patentanspruchs 1 gelöst. Weitere, die Erfindung ausgestaltenden Merkmale sind in den nachfolgenden Ansprüchen enthalten.

Die mit der Erfindung hauptsächlich erzielten Vorteile sind darin zu sehen, daß die Resonanzkammervorrichtung einen einzigen Resonanzbehälter umfaßt, in dem Schwingrohraufladung mit langen Saugrohren im mittleren Drehzahlbereich und kombinierte Schwingrohr-Resonanzaufladung mit kurzen Saugrohren im oberen Drehzahlbereich auf effiziente Art und Weise möglich ist. Dabei sind die Bauteile dieser Luftsauganlage, d.h. Resonanzbehälter sowie erste und zweite Saugrohrabschnitte im Aufbau einfach und leicht herstellbar. Darüber hinaus ist der Raumanspruch dieser Luftsauganlage dank kompakter Bauart gering.

In der Zeichnung wird ein Ausführungsbeispiel der Erfindung gezeigt, das nachstehend näher beschrieben ist.

Es zeigen
- Fig. 1: eine Ansicht von oben auf eine schematisch dargestellte Luftsauganlage einer Brennkraftmaschine,

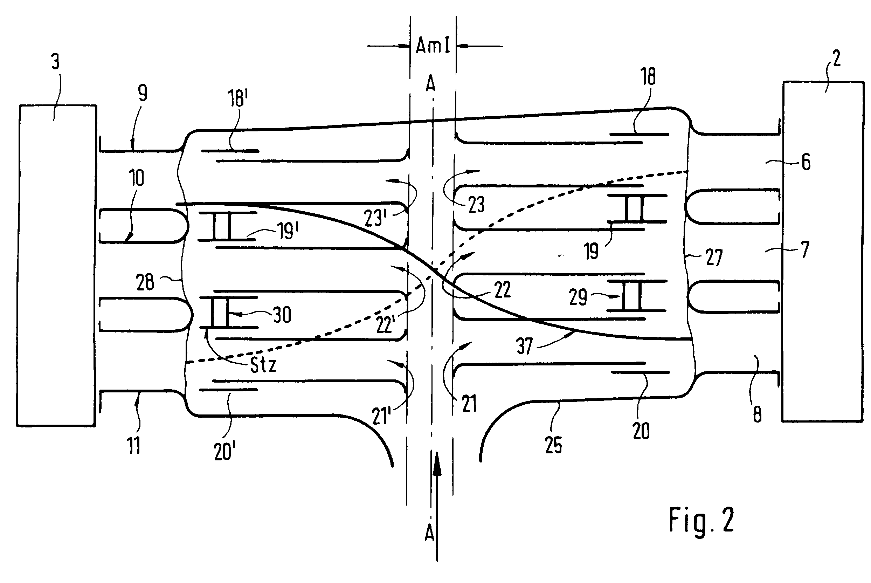

- Fig. 2: eine Ansicht entsprechend Fig. 1,
- Fig. 3: eine Ansicht entsprechend Fig. 1 einer konstruktiven Lösung der Luftsauganlage,

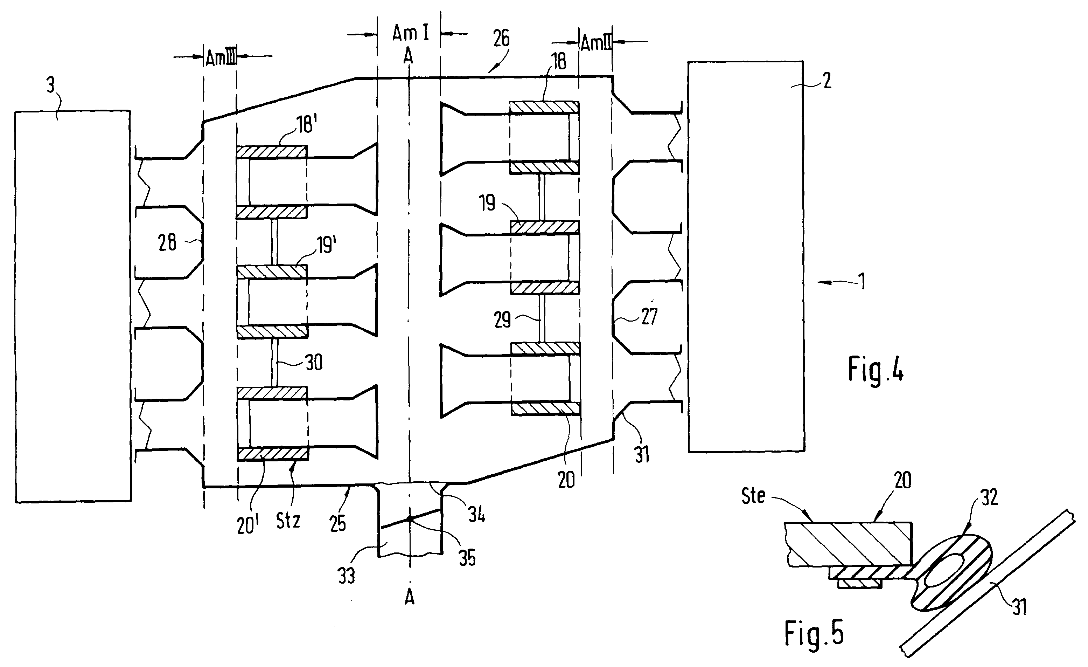

- Fig. 4: eine Ansicht entsprechend Fig. 3,
- Fig. 5: eine Einzelheit X der Fig. 3 in größerem Maßstab.

Eine mehrzylindrige Brennkraftmaschine 1 umfaßt gegenüberliegende Zylinderreihen 2 und 3 - Boxerbauart -, zwischen denen eine Luftsauganlage 4 vorgesehen ist. Die Luftsauganlage 4 ist als Resonanzkammervorrichtung 5 ausgebildet, die mit Saugrohren 6, 7, 8 und 9, 10, 11 an Zylinder der Zylinderreihen 2 und 3 angeschlossen sind.

Die Saugrohre 6, 7, 8 und 9, 10, 11 der Resonanzkammervorrichtung 5 weisen erste äußere Saugrohrabschnitte12, 13, 14 und 12', 13', 14' und zweite innere Saugrohrabschnitte15, 16, 17 und 15', 16', 17' auf. Die zweiten inneren Saugrohrabschnitte15, 16, 17 und 15', 16', 17' sind einerseits unter Vermittlung von beweglichen Schiebern 18, 19, 20 und 18', 19', 20' mit den ersten äußeren Saugrohrabschnitten 12, 13, 14 und 12', 13', 14' verbindbar. Andererseits sind Mündungen 21, 22, 23 und 21', 22', 23' der zweiten inneren Saugrohrabschnitte 15, 16, 17 und 15', 16', 17' auf eine Mittellängsebene A-A ausgerichtet, die zwischen den Saugrohren 6, 7, 8 und 9, 10, 11 verläuft.

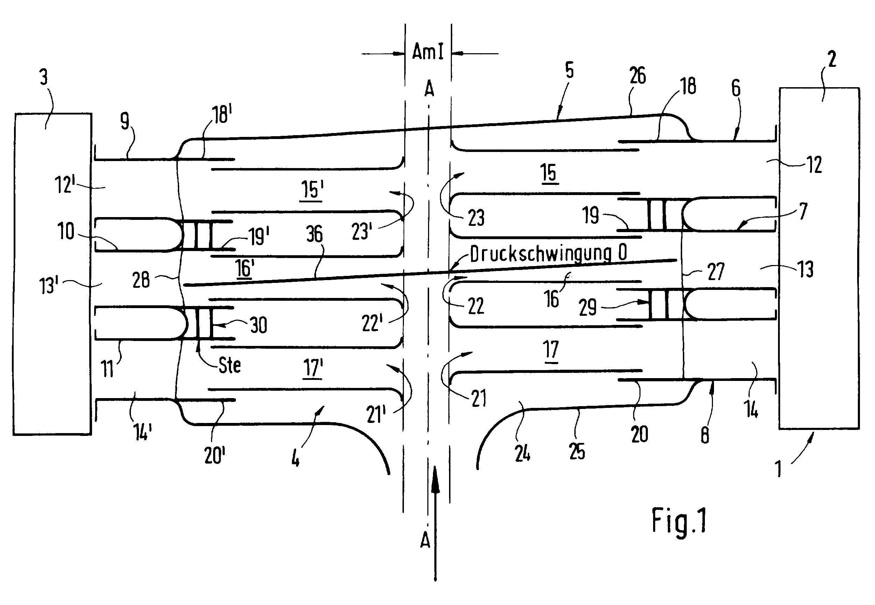

Die Resonanzkammervorrichtung 5 besitzt einen einzigen Resonanzbehälter 24, in dem die Schieber 18, 19, 20 und 18', 19', 20' der zweiten inneren Saugrohrabschnitte 15, 16, 17 und 15', 16', 17' für jede Zylinderreihe, z.B. 2, derart relativbeweglich angeordnet, daß die zweiten inneren Saugrohrabschnitte 15, 16, 17 und 15', 16', 17' in einer ersten Stellung Ste im Langrohrbetrieb und in einer zweiten Stellung Stz im Kurzrohrbetrieb arbeiten. Der Resonanzbehälter 24 weist gemäß Fig. 1 - von oben auf die Brennkraftmaschine 1 gesehen - eine etwa rechteckige Grundform auf, derart, daß sich die zweiten inneren Saugrohrabschnitte 12, 13, 14 und 12', 13', 14' in Richtung von längeren Seiten 25, 26 des Resonanzbehälters 24 erstrecken; kürzere Seiten 27, 28 des Resonanzbehälters 24 sind den Zylinderreihen 2 und 3 zugekehrt. Das Verhältnis der rechteckigen Grundform, d.h. kürzere Seiten 27, 28 zu längeren Seiten 25, 26, beträgt bei der dargestellten Ausführungsform etwa 1:1,5 bis 2.

Zwischen den einander zugekehrten Mündungen 21, 22, 23 und 21', 22', 23' ist ein Abstand - Abstandsmaß Aml - vorgesehen, und die Schieber 18, 19, 20 und 18', 19', 20' der zweiten Saugrohrabschnitte 15, 16, 17 und 15', 16', 17' sind jeweils zu einer Baueinheit 29 bzw. 30 zusammengefaßt, wodurch die Schieber z.B. 18, 19, 20 der Baueinheit 29 gemeinsam betätigbar sind.

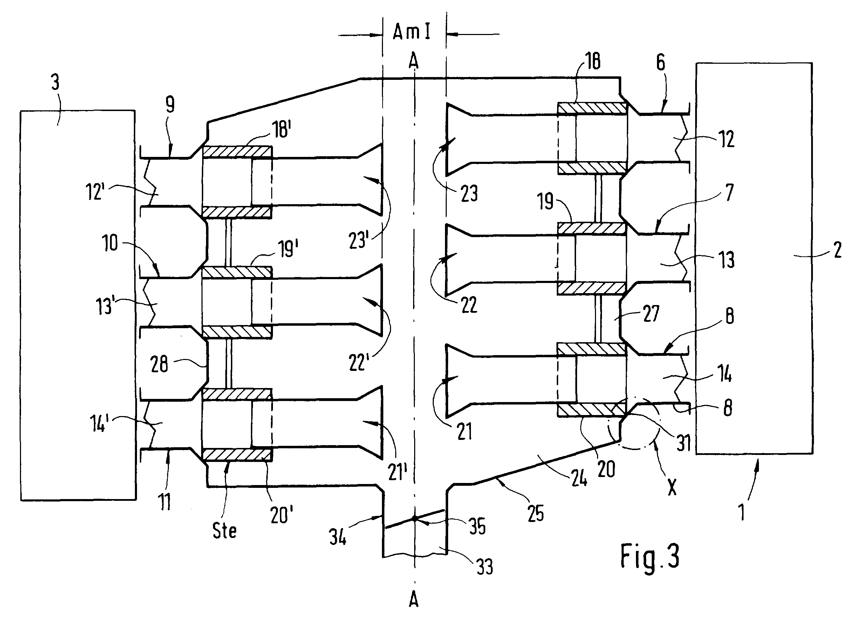

In der ersten Stellung Ste sind die Schieber 18, 19, 20 und 18', 19', 20' mit den zugehörigen ersten Saugrohrabschnitten 15, 16, 17 und 15', 16', 17' verbunden. Dagegen sind in der zweiten Stellung Stz zwischen den besagten Schiebern und den besagten ersten Saugrohrabschnitten jeweils ein Abstand - Abstandsmaß AmlI und AmlII - vorgesehen. Die Schieber 18, 19, 20 und 18', 19', 20' ruhen in der ersten Stellung Ste in trichterförmigen Aufnahmen 31 der ersten äußeren Saugrohrabschnitte 15, 16, 17 und 15', 16', 17', wobei die Schieber 18, 19, 20 und 18', 19', 20' unter Vermittlung von Dichtkörpern 32 mit den Aufnahmen 31 zusammenwirken. Die Luftsauganlage 4 ist gemäß Fig. 3 mit einem als Rohrleitung 33 ausgebildeten Lufteintritt 34 versehen, der mit der längeren Seite 25 des Resonanzbehälters 24 verbunden ist. Im Ausführungsbeispiel verläuft der Lufteintritt 34 koaxial zur Längsmittelebene A-A des Resonanzbehälters 24. In der dem Lufteintritt 34 vorgeschalteten Rohrleitung 33 ist eine Drosselklappe 35 angeordnet.

Beim Betrieb der Brennkraftmaschine 1 mit der beschriebenen Luftsauganlage 4 im mittleren Drehzahlbereich - bis ca. 5000 U/min - bilden die ersten äußeren Saugrohrabschnitte und die zweiten inneren Saugrohrabschnitte entsprechend lange Saugrohre - erste Stellung Ste der Schieber 18, 19, 20 und 18', 19', 20' -, wobei die Ansaugstelle der langen Saugrohre bei den Mündungen 21, 22, 23 und 21', 22', 23' liegt und die Füllung der Zylinder im wesentlichen durch die gasdynamischen Vorgänge in den Einzelsaugrohren beeinflußt werden. In diesem Betriebszustand ist die Druckschwingung 0, was durch eine Linie 36 - Fig. 1 - dargestellt ist.

Sind die Schieber 18, 19, 20 und 18', 19', 20' dagegen in der Stellung Stz - oberer Drehzahlbereich ca. 5000 bis 7000 U/min - ist die Ansaugstelle zu den kürzeren Seiten 27, 28 des Resonanzbehälters 24 hin verlagert, wodurch das Gas in der gesamten Anlage zum Schwingen angeregt wird. Sobald sich die Saugfequenz der System-Eigenfrequenz nähert (Resonanzfall) wird unter diesen Betriebsbedingungen eine ausgeprägt gute Zylinderfüllung erzielt. Das Niveau der entsprechenden Druckschwingungen ist durch eine durchgezogene Linie 37 und eine gestrichelte Linie 38 dargestellt.

## Patentansprüche

1. Luftsauganlage einer mehrzylindrigen Brennkraftmaschine mit zwei gegenüberliegenden Zylinderreihen, wobei zwischen den Zylinderreihen eine Resonanzkammervorrichtung angeordnet ist, die mit Saugrohren an Zylinder der Zylinderreihen und mit einer Zuleitung an ein Luftfilter angeschlossen ist, welche Resonanzkammervorrichtung erste äußere Saugrohrabschnitte und zweite innere Saugrohrabschnitte der Saugrohre aufweist, wovon die inneren Saugrohrabschnitte einerseits mit beweglichen Schiebern an die äußeren Saugrohrabschnitte herangeführt und mit Mündungen auf eine Mittellängsebene zwischen den Saugrohren gerichtet sind, dadurch gekennzeichnet, daß die Resonanzkammervorrichtung (5) einen einzigen mit den ersten äußeren Saugrohrabschnitten (12, 13, 14 und 12', 13', 14') und den zweiten inneren Saugrohrabschnitten (15, 16, 17 und 15', 16', 17') verbundenen Resonanzbehälter (24) aufweist, in dem die zweiten Saugrohrabschnitte (15, 16, 17 und 15', 16', 17') für jede Zylinderreihe (2 und 3) derart relativbeweglich zur Längsmittelebene (A-A) des Resonanzbehälters (24) angeordnet sind, daß die zweiten Saugrohrabschnitte (15, 16, 17 und 15', 16', 17') mittels den Schiebern (18, 19, 20 und 18', 19', 20') in einer ersten Stellung (Ste) im Langrohrbetrieb und einer zweiten Stellung (Stz) im Kurzrohrbetrieb arbeiten.

2. Luftsauganlage nach Anspruch 1, dadurch gekennzeichnet, daß der Resonanzbehälter (24) von oben gesehen in etwa eine rechteckige Grundform aufweist, wobei sich die zweiten Saugrohrabschnitte (15, 16, 17 und 17', 18', 19') in Richtung von längeren Seiten (25, 26) des Resonanzbehälters (24) erstrecken.

3. Luftsauganlage nach Anspruch 1, dadurch gekennzeichnet, daß das Verhältnis der rechteckigen Grundform des Resonanzbehälters (24) kürzerer Seiten (27, 28) zu längerer Seiten (25, 26) etwa 1:1,5 bis 2 beträgt.

4. Luftsauganlage nach Anspruch 1, dadurch gekennzeichnet, daß zwischen den einander zugekehrten Mündungen (21, 22, 23 und 21', 22', 23') der zweiten Saugrohrabschnitte (15, 16, 17 und 15', 16', 17') ein Abstand (Aml) vorgesehen ist.

5. Luftsauganlage nach Anspruch 1, dadurch gekennzeichnet, daß die Schieber (18, 19, 20 und 18', 19', 20') der zweiten Saugrohrabschnitte (15, 16, 17 und 15', 16', 17') der beiden Zylinderreihen (2 und 3) jeweils zu einer ersten Baueinheit (29) und einer zweiten Baueinheit (30) zusammengefaßt sind.

6. Luftsauganlage nach einem oder mehreren der vorangehenden Ansprüche, dadurch gekennzeichnet, daß die zweiten Saugrohrabschnitte (15, 16, 17 und 15', 16', 17') in der ersten Stellung (Ste) mit den zugehörigen ersten Saugrohrabschnitten (12, 13, 14 und 12', 13', 14') verbunden sind, wogegen in der zweiten Stellung (Stz) zwischen den ersten Saugrohrabschnitten (12, 13, 14 und 12', 13') und den zweiten Saugrohrabschnitten (15, 16, 17 und 15', 16', 17') ein Abstand (AmlI und AmlI) vorgesehen ist.

7. Luftsauganlage nach Anspruch 6, dadurch gekennzeichnet, daß in der ersten Stellung (Ste) die Schieber (18, 19, 20 und 18', 19', 20') unter Vermittlung von Dichtkörpern (32) mit den ersten Saugrohrabschnitten (12, 13, 14 und 12', 13', 14') zusammenwirken.

8. Luftsauganlage mit einem Lufteintritt nach Anspruch 1, dadurch gekennzeichnet, daß der Lufteintritt (34) an einer längeren Seite (25) des Resonanzbehälters (24) vorgesehen ist.

9. Luftsauganlage nach den Ansprüchen 1 und 8, dadurch gekennzeichnet, daß der Lufteintritt (34) in der Nähe Mittellängsebene (A-A) des Resonanzbehälters (24) vorgesehen ist.

10. Luftsauganlage nach den Ansprüchen 8 und 9, dadurch gekennzeichnet, daß dem Lufteintritt (34) eine Rohrleitung (33) vorgeschaltet ist, in dem eine Drosselklappe (35) vorgesehen ist.
